# EUROPEAN PATENT APPLICATION

(11) **EP 4 717 427 A2**
(43) Date of publication of application: **01.04.2026**
(21) Application number: 25217732.4
(22) Date of filing: 21.03.2023
(51) Int. Cl.: B29C 43/08

(54) **PORTIONING UNIT**

(30) Priority: 23.03.2022 DE 102022106909
(62) Divisional of application: 23713095.0
(71) Applicant: Thermoplay S.r.l., 11026 Pont-Saint-Martin (AO) (IT)
(72) Inventor: Bosonetto, Guido, 11026 Pont Saint Martin (AO) (IT); Cocito, Carlo, 10090 San Giusto Canavese (TO) (IT)
(74) Representative: Rentsch Partner AG

(57) **Abstract**

The disclosure relates to a portioning unit typically comprising a first chamber, interconnected to the extrusion unit by a first valve, and a first piston arranged in the first chamber displaceable in a longitudinal direction of the first chamber configured to receive a specific volume of plastic material from the extrusion unit by the first valve. Usually a second chamber having an inlet opening, which is in fluid connection with the first chamber by a second valve, is configured to receive plastic material from the first chamber through the second valve and a second piston displaceable in a longitudinal direction of the second chamber to discharge the specific volume from the portioning unit through a discharge opening by displacing the second piston from an extended position to a retracted position.

## Description

### FIELD OF THE DISCLOSURE

The present disclosure relates to a portioning unit suitable for a compression molding machine, a compression molding machine comprising such a portioning unit and a method of operating such a portioning unit.

### BACKGROUND OF THE DISCLOSURE

Devices for separating a continuous supply of plastic material from an extruder into separate charges of plastic material are generally known. These charges of plastic material are typically provided to a mold to be further processed, in particular in a (continuous) compression molding process. Usually the plastic material is received by such devices in a pasty form, meaning in a state between solid and liquid.

Several attempts are known from the prior art to provide such devices, which are briefly described hereinafter.

GB976615A published in 1964 in the name of Union Carbide Corp. relates to an apparatus including molds with a plurality of cavities in conjunction with a number of nozzles supplied from a single extruder. A mold table may be fixed with the nozzle or nozzles moving continuously, laminates may be produced by placing a disc or sheet of different material into the mold cavity prior to forming or placing the disc or sheet on top of the measured portion or forming a first portion, putting a disc on top of it and forming a second portion on top of the disc. Such laminates may be used as crown cap liners.

US6368094B1 published 2002 in the name of Alcoa Closure Systems relates to an apparatus for delivering plural molten plastic pellets into cavities for compression molding of the pellets into bottle closures or bottle closure liners. The apparatus is provided for delivering molten plastic pellets from a supply of molten plastic to a plurality of molding blocks, each molding block having a row of cavities. The molding blocks are carried on a rotating carousel. The apparatus includes a rotating multi-cutter with a plurality of cutter blades, and a manifold block which receives the extruded molten-plastic and delivers the molten plastic to a plurality of nozzles, each nozzle aligned with one or more of the cutter blades. The cutter blades remove a row of plastic pellets from the molten plastic at the nozzles and deliver the plastic pellets into one row of cavities of a molding block.

### SUMMARY OF THE DISCLOSURE

The known devices for separating a continuous supply of plastic material from an extruder into separate charges of plastic material have several disadvantages which prevent parallelization of the process. It is an object of the present disclosure to address at least one of these disadvantages.

In a preferred variation of the disclosure a portioning unit is interconnectable in a compression molding machine downstream to an outlet of an extrusion unit to receive from the extrusion unit plastic material and to separate charges therefrom having a specific volume. However, other applications than compression molding are possible, such as blow molding or injection molding of thermoplastics or other materials.

The portioning unit should be designed to allow a consistent and repeatedly accurate portioning of plastic material into charges of a (definable) specific volume, especially when the portioning unit comprises several discharge openings which are configured to operate in parallel. An unbalanced portioning of the plastic material should be avoided. In particular, in applications where the portioning unit is required to simultaneously separate plastic material into several charges of specific volume through separate discharge openings.

Generally, the portioning unit according to the disclosure comprises a first chamber, interconnected to the extrusion unit by a first valve. A first piston is arranged in the first chamber displaceable in a longitudinal direction of the first chamber configured to receive a specific volume of plastic material from the extrusion unit by the first valve. In particular, by displacing the first piston from a retracted position to an extended position. Usually a second chamber having an inlet opening, which is in fluid connection with the first chamber by a second valve, is configured to receive plastic material from the first chamber through the second valve. Typically, a second piston is arranged displaceable in a longitudinal direction of the second chamber to discharge the specific volume from the portioning unit through a discharge opening by displacing the second piston from an extended position to a retracted position.

Preferably, the extended position of the first piston defines in combination with the first chamber the specific volume of plastic material receivable from the extrusion unit each cycle. This allows a higher accuracy of the volume of the charge of plastic material discharged from the portioning unit per cycle compared to devices relying on a continuous extrusion of material which is periodically sheared off by a cutting device to separate it into charges.

Depending on the design, the first piston and the second piston are arranged laterally spaced apart from each other. Alternatively, the first piston and the second piston can be arranged coaxially to each other. A coaxial arrangement allows a more compact construction, while a laterally separated arrangement allows for a simpler construction.

Good results are possible, when the first and/or the second valve are formed as pin-valves configured to open and close a material channel for the plastic material by displacing a pin. Alternatively, the first piston forms part of the first valve. Here the first piston comprises a first sealing surface for opening a first passage of the material channel connected to the first chamber. If appropriate, the second piston may form part of the second valve. In this case, the second piston comprises a second sealing surface for opening a second passage of the material channel connected to the second chamber.

In some variations, in particular when the first and the second piston are arranged coaxially, the first piston may have a pressure compensation channel for at least temporarily interconnecting the first valve and the first chamber to avoid displacement of the first piston against a negative pressure (vacuum). The pressure compensation channel is preferably formed as a groove in the longitudinal direction on the outside of the first piston. The first piston can be configured rotatable around the longitudinal direction to temporarily connect and disconnect the first valve and the first chamber via the pressure compensation channel.

If present, the extended position of the first piston is defined by a mechanical stop. The mechanical stop preferably comprises a first stop surface which stops a movement of the first piston in the longitudinal direction of the first chamber, when the first piston is displaced from the retracted position into the extended position. Typically, the first piston rests in the extended position against the first stop surface of the mechanical stop.

Good performance is possible, when a second stop surface is arranged in the longitudinal direction of the first chamber opposite of the first stop surface. Typically, the first piston rests in the retracted position against the second stop surface.

In a preferred variation, the position of the mechanical stop is adjustable in longitudinal direction. This can be achieved, when the first stop surface is for example arranged at a washer, in that washers of various heights (in the longitudinal direction) or different numbers of washers can be installed. However other implementations of the mechanical stop being adjustable are possible, such as height-adjustable latching mechanisms or the like.

Depending on the field of application, the portioning unit comprises at least one charge separating unit having a first housing which is fluidly interconnected downstream to a second housing of a supply block. Typically, the second housing of the supply block is fluidly interconnected downstream to an outlet of an extrusion unit. In particular, in applications requiring a simultaneous supply of several charges of plastic material, the portioning unit preferably comprises several first housings of charge separating units being arranged parallel next to each other for an essentially simultaneous separation of several charges of plastic material each having a specific volume, said first housings being respectively interconnected to a second housing of a common supply block. The second housing of the supply block is preferably implemented as a hot runner, in that it comprises channels for distributing the plastic material received from the extruder to the charge separating units, while keeping the material in pasty form. For this purpose, the second housing may comprise at least one heating element.

Good results can be achieved, when the first housing of the charge separating unit is of a multipart design, allowing a modular assembly. Preferably the first housing of the charge separating unit comprises a first block, housing the first chamber and a second block, housing the second chamber being fluidly and thermally interconnected to the first block. If present a bushing seals the fluid interconnection between the first block and the second block, by pressing corresponding sealing surfaces of the bushing and the first respectively second block against each other.

In case the first valve is formed as a separate element, a third block may house the first valve being fluidly interconnected upstream to the first block.

For a precisely timeable discharging of a charge of plastic material, the second piston may comprise an air tube ending in an end surface of the second piston for pneumatically separating the plastic material from the portioning unit during discharge. This makes an additional and separate cutting device known from the prior art obsolete.

To ensure a good discharge of the charge of plastic material, the diameter of the second piston is essentially equal to the diameter of the discharge opening. This allows the second piston to discharge essentially all of the plastic material in the second chamber, such that essentially no material remains inside the second chamber over a period of time (multiple cycles). Thus the potential for thermal degradation of the plastic material is minimized.

For actuating the pistons of the portioning unit, at least one actuator is foreseen. In a preferred variation the first piston is interconnected to a first actuator for displacing the first piston between the extended position and the retracted position. In addition, the second piston is typically interconnected to a second actuator for displacing the second piston in the longitudinal direction of the second chamber. In case of several charge separating units a common first actuator may actuate two or more first pistons. Similarly, a common second actuator may actuate two or more second pistons. However individual first and second actuators per charge separating unit is possible as well. Depending on the application the first and/or the second actuator is out of the following, a hydraulic actuator, a pneumatic actuator or an electric actuator.

In some variations the portioning unit is at least partially manufactured by an additive process, in particular the supply block is manufactured by an additive process.

Another aspect of the disclosure is directed to a compression molding device comprising at least one portioning unit as described above and hereinafter in more detail.

The portioning unit according to the disclosure is suitable to separate a variety of different materials in various states into charges of specific volume. The state of the material can be between solid and liquid, in particular pasty or plastic. The material can be a polymeric or plastic material, in particular a thermoplastic material. However other materials are possible as well, such as paper pulp, wood fibre material or vegetal fibre material (for example wheat).

A further aspect of the disclosure relates to a method of operating a portioning unit as described above. The described embodiments of the portioning unit can serve to carry out the method according to the disclosure.

In a preferred variation the method comprises the steps of opening the first valve; receiving in the first chamber a specific volume of plastic material from the extrusion unit; closing the first valve and opening the second valve; displacing the first piston from the extended position into the retracted position, thereby pushing plastic material from the first chamber into the second chamber; and displacing the second piston from the extended position into the retracted position, thereby pushing plastic material through the discharge opening.

The previously described embodiment of the method for operating a portioning unit disclose at the same time correspondingly designed embodiments of the portioning unit and vice versa.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The herein described disclosure will be more fully understood from the detailed description given herein below and the accompanying drawings which should not be considered limiting to the disclosure described in the appended claims. The drawings are showing:
- Fig. 1: a partially sectioned view of a first variation of a portioning unit according to the disclosure;
- Fig. 2: a section view of the first variation of Fig. 1 indicated by section line LL;
- Fig. 3: a perspective view of a second variation of a portioning unit according to the disclosure;
- Fig. 4: a section view of the second variation of Fig. 3 indicated by section line NN;
- Fig. 5: a perspective view of a third variation of a portioning unit according to the disclosure; and
- Fig. 6: a section view of the third variation of Fig. 5 indicated by section line OO.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

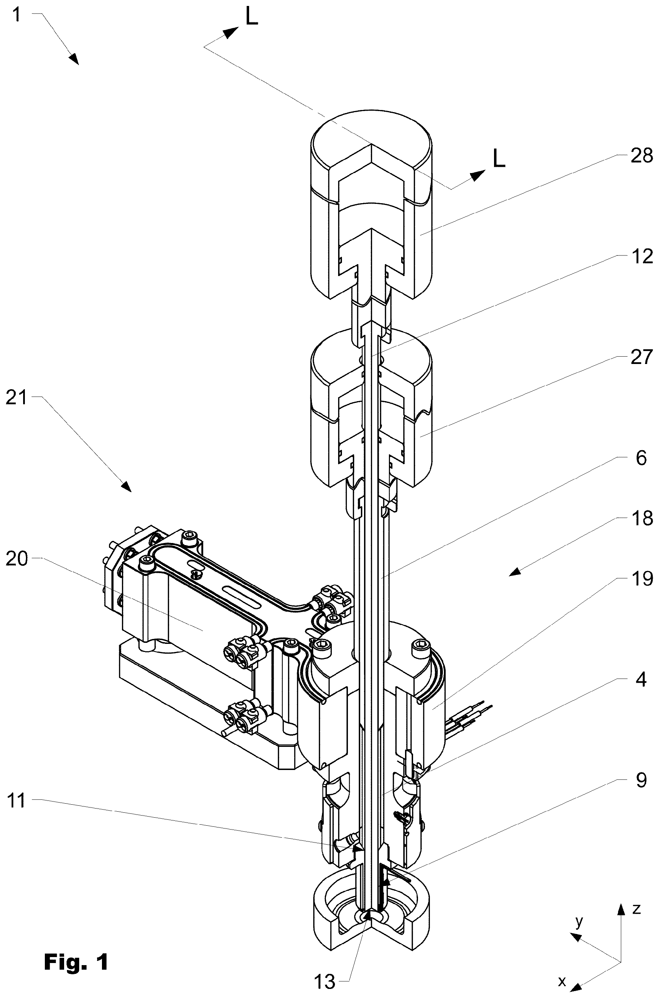

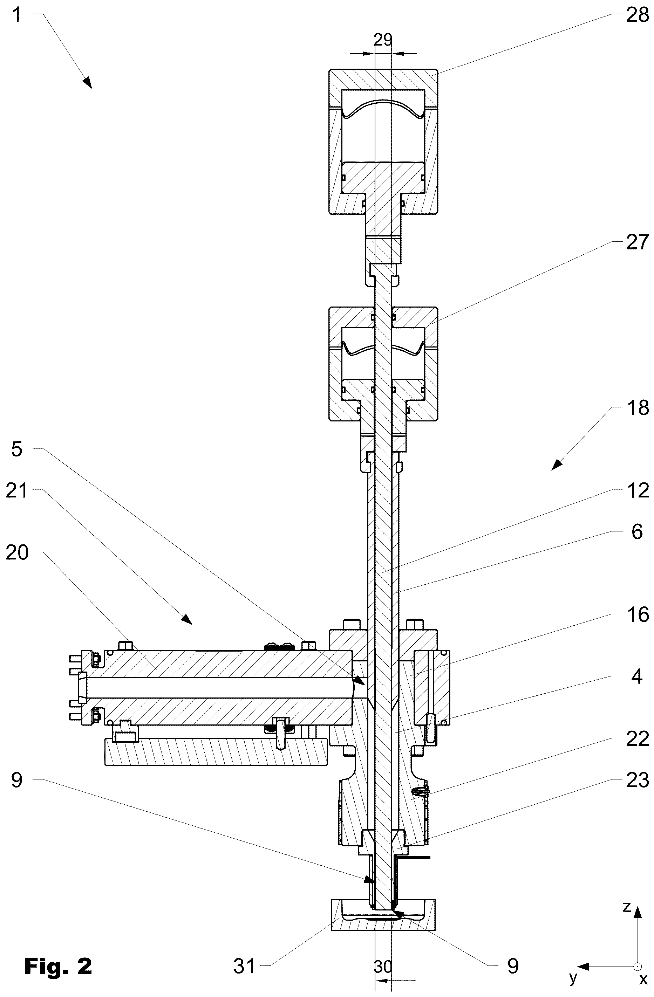

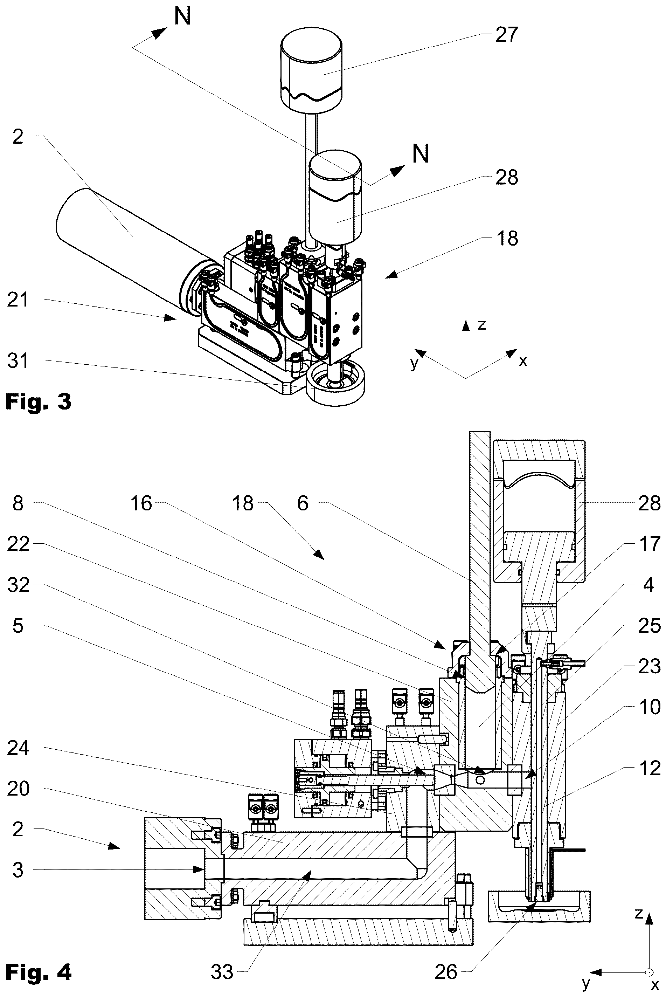

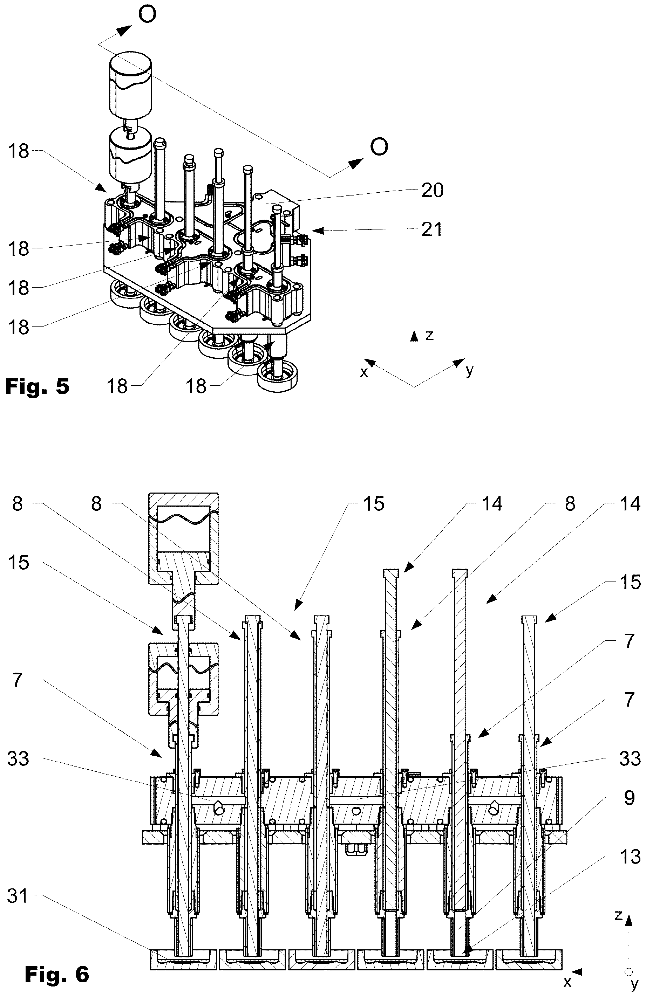

**Figure 1** shows a partially sectioned view of a first variation of a portioning unit 1 according to the disclosure and **Figure 2** shows a section view of the first variation of **Figure 1** indicated by section line LL. In **Figure 3** a perspective view of a second variation of a portioning unit 1 according to the disclosure is shown and in **Figure 4** a section view of the second variation of **Figure 3** indicated by section line NN. **Figure 5** shows a perspective view of a third variation of a portioning unit 1 according to the disclosure and **Figure 6** shows a section view of the third variation of **Figure 5** indicated by section line OO.

The variations of the portioning unit 1 are interconnected downstream to an outlet 3 of an extrusion unit 2 to receive from the extrusion unit 2 plastic material, as shown in **Figures 3** and **4** (not shown for the first and the third variation). The portioning unit 1 separates the plastic material received from the extrusion unit 2 into separate charges of material having a specific volume. These charges are typically provided directly to a mold 31 of a compression molding device (not shown) or indirectly thereto via a transfer device 31 for further processing.

The shown variations usually comprise a first chamber 4 and a second chamber 9, for separating the plastic material into charges. The first chamber 4, as visible in **Figure 4****,** is interconnected to the extrusion unit 2 by a first valve 5. The second chamber 9 is typically interconnected to the first chamber 4 by a second valve 11 via an inlet opening 10. This allows a selective transport of plastic material between the first and the second chamber 4, 9. As shown, a first piston 6 is arranged in the first chamber 4 displaceable in a longitudinal direction z of the first chamber 4. The first chamber 4 is configured to receive the specific volume of plastic material from the extrusion unit 2 when the first valve 5 is open. In the second variation, as shown in **Figures 3** and **4****,** the first piston 6 is displaced from the retracted position 7 into the extended position 8, while the plastic material is flowing into the first chamber 4 by means of the pressure generated by the extrusion unit 2.

In the first and the third variation, as shown in **Figures 1****,** **2** and **5****, 6,** the first piston 6 is displaced from the retracted position 7 into the extended position 8 by a first actuator 27 interconnected to the first piston 6, before the plastic material is received.

A second piston 12 is usually arranged displaceable in a longitudinal direction z of the second chamber 9 to discharge the specific volume from the portioning unit 1 through a discharge opening 13 by displacing the second piston 12 from an extended position 14 to a retracted position 15.

In the first variation, as shown in **Figures 1** and **2****,** the first and the second piston 6, 12 are arranged coaxially. Here the first piston 6 is hollow to accommodate the second piston 12. The first and the second piston 6, 12 are usually arranged independently movable from each other. A similar coaxial arrangement is realized in the third variation, as best visible in **Figure 6****.**

In the second variation, visible in **Figures 3** and **4****,** the first and the second piston 6, 12 are arranged laterally spaced apart from each other. Here the first valve 5 is formed as a pin-valve 5 configured to open and close a material channel 33 for the plastic material by displacing its pin.

As implemented in the first and the third variation, the first valve can also be formed in part by the first piston 6. Here an outer surface of the first piston 6 opens and closes a passage of the material channel 33, as best visible in **Figure 6****.** Usually the second valve 11 is formed by the second piston 12 as shown in **Figure 1****,** in a similar manner as the first piston. In this case the second piston 12 comprises an outer surface or outer edge, acting as a sealing means for opening and closing a passage to the second chamber 9.

In order to define the specific volume of plastic material receivable each cycle from the extrusion unit 2, the extended position 8 of the first piston 6 is defined by a mechanical stop 16 having a first stop surface 17. The first stop surface 17 stops a movement of the first piston 6 in the longitudinal direction z of the first chamber 4, when the first piston 6 is displaced from the retracted position 7 into the extended position 8. In the longitudinal direction z opposite to the first stop surface 17, usually a second stop surface 32 is arranged for limiting the movement of the first piston 6 in the longitudinal direction z of the first chamber 4, when the first piston 6 is displaced from the extended position 8 into the retracted position 7. The first and the second stop surfaces 17 and 32 are best visible in **Figure 2****.**

As shown in **Figures** 3 and 4, the portioning unit 1 typically comprises at least one charge separating unit 18 having a first housing 19 which is fluidly interconnected upstream to a second housing 20 of a supply block 21. The supply block 21 is fluidly interconnected downstream of the outlet 3 of the extrusion unit 2. In the shown variations, the first housing 19 of the charge separation unit 18 comprises a first block 22 housing the first chamber 4 and a second block 23 housing the second chamber 9 being fluidly and thermally interconnected to the first block 22. The second variation comprises an addition a third block 24, which is fluidly interconnected upstream to the first block 22 and houses the first valve 5, in this case a separate pin-valve 5. The plastic material flows from the outlet 3 through the supply block 21 (via the third block 24) into the first chamber 4 in the first block 22 and therefrom further into the second chamber 9 in the second block 23, wherefrom it is discharged via the discharge opening 13.

In difference to the first and the second variation, the third variation as shown in **Figure 5****,** comprises several first housings 22 of charge separating units 18 being arranged parallel next to each other interconnected to a second housing 20 of a common supply block 21.

As best visible in **Figure** 4, the second piston 12 may comprise an air tube 25 ending in an end surface 26 of the second piston 12 for pneumatically separating the plastic material from the portioning unit 1 during discharge of a charge.

For a clean discharging of the plastic material from the discharge opening 13, the diameter 29 of the second piston 12 is essentially equal to the diameter 30 of the discharge opening 13, as indicated in **Figure 2****.**

In the shown variation, the first piston 6 is interconnected to a first actuator 27 for displacing the first piston 6 between the extended position 8 and the retracted position 7. In addition, the second piston 12 is interconnected to a second actuator 28 for displacing the second piston 12 between the retracted and the extended position 15, 14. Here the shown actuators 27, 28 are of a pneumatic type. The wave-like cut visible in the first actuator 15 and the second actuator 15 indicates that the part is reduced in size for displayability. An exemplary sequence of positions 7, 8, 14, 15 of the first and the second piston 6, 12 within one cycle of providing a charge of plastic material to a mold 31 is shown in **Figure** 6 from left to right.

Rather, the words used in the specification are words of description rather than limitation, and it is understood that various changes may be made without departing from the scope of the disclosure.

### LIST OF DESIGNATIONS

| | | | |
|---|---|---|---|
| 1 | Portioning unit | 18 | Charge separation unit |
| 2 | Extrusion unit | 19 | First housing |
| 3 | Outlet (extrusion unit) | 20 | Second housing |
| 4 | First chamber | 21 | Supply block |
| 5 6 | First valve | 22 | First block (first housing of the charge separation unit) |
| | First piston | | |
| 7 | Retracted position (first piston) | 23 | Second block (first housing of the charge separation unit) |
| 8 | Extended position (first piston) | | |
| 9 | Second chamber | 24 | Third block |
| 10 | Inlet opening | 25 | Air tube (second piston) |
| 11 | Second valve | 26 | End surface (second piston) |
| 12 | Second piston | 27 | First actuator (first piston) |
| 13 | Discharge opening | 28 | Second actuator (second piston) |
| 14 15 | Extended position (second piston) | | |
| | | 29 | Diameter (second piston) |
| | Retracted position (second piston) | 30 | Diameter (discharge opening) |
| | | 31 | Mold / transport device |
| 16 | Mechanical stop | 32 | Second stop surface |
| 17 | First stop surface | 33 | Material channel |

## Claims

1. A portioning unit (1) interconnectable in a compression molding machine downstream to an outlet (3) of an extrusion unit (2) to receive from the extrusion unit (2) plastic material and to separate charges therefrom having a definable specific volume, the portioning unit (1) comprising:
a. a first chamber (4), interconnected to the extrusion unit (2) by a first valve (5), and
b. a first piston (6) arranged in the first chamber (4) displaceable in a longitudinal direction of the first chamber (4) configured to receive a specific volume of plastic material from the extrusion unit (2) by the first valve (5), wherein the extended position of the first piston (6) defines in combination with the first chamber (4) the specific volume;
c. a second chamber (9) having an inlet opening (10), which is in fluid connection with the first chamber (4) by a second valve (11), configured to receive plastic material from the first chamber (4) through the second valve (11) and
d. a second piston (12) displaceable in a longitudinal direction of the second chamber (9) to discharge the specific volume from the portioning unit (1) through a discharge opening (13) by displacing the second piston (12) from an extended position (14) to a retracted position (15).

2. The portioning unit (1) according to at least one of the previous claims, **wherein** the extended position of the first piston (6) is defined by a mechanical stop (16).

3. The portioning unit (1) according to claim 2, **wherein** a position of the mechanical stop (16) is adjustable in longitudinal direction.

4. The portioning unit (1) according to at least one of the previous claims, **wherein** the first piston (6) is interconnected to a first actuator (27) for displacing the first piston (6) between the extended position and the retracted position.

5. The portioning unit (1) according to claim 4, **wherein** individual first actuators (27) or a common first actuator (27) actuates two or more first pistons (6).

6. The portioning unit (1) according to at least one of the previous claims, **wherein** the first piston (6) forms part of the first valve (5).

7. The portioning unit (1) according to at least one of the previous claims, **wherein** the second piston (12) forms part of the second valve (11).

8. The portioning unit (1) according to at least one of the previous claims, **wherein** a diameter (29) of the second piston (12) is essentially equal to a diameter (30) of the discharge opening (13).

9. The portioning unit (1) according to at least one of the previous claims, **wherein** the portioning unit (1) comprises at least one charge separation unit (18) having a first housing (19) which is fluidly interconnected downstream to a second housing (20) of a supply block (21).

10. The portioning unit (1) according to claim 9, **wherein** several first housings (19) of charge separation units (18) are arranged parallel next to each other for an essentially simultaneous separation of several charges of plastic material through individual discharge openings (13) each charge having a specific volume, said first housings (19) being respectively interconnected to a second housing (20) of a common supply block (21).

11. The portioning unit (1) according to at least one of the previous claims 9 and 10, **wherein** the first housing (19) of the charge separation unit (18) comprises
a. a first block (22) housing the first chamber (4) and
b. a second block (23) housing the second chamber (9) being fluidly and thermally interconnected to the first block (22).

12. The portioning unit (1) according to claim 11, **wherein** a third block (24) is fluidly interconnected upstream to the first block (22) and houses the first valve (5).

13. The portioning unit (1) according to at least one of the previous claims, **wherein** in the second piston (12) comprises an air tube (25) ending in an end surface (26) of the second piston (12) for pneumatically separating the plastic material from the portioning unit (1) during discharge.

14. The portioning unit (1) according to at least one of the previous claims, **wherein** the portioning unit (1) is at least partially manufactured by an additive process, in particular the supply block (21) is manufactured by an additive process.

15. Compression molding device comprising a portioning unit according at least one of the preceding claims.

16. Method of operating a portioning unit (1) according to at least one of the previous claims 1 to 14, the method comprising the steps:
a. opening the first valve (5);
b. receiving in the first chamber (4) a specific volume of plastic material from the extrusion unit (2);
c. closing the first valve (5);
d. opening the second valve (11);
e. displacing the first piston (6) from the extended position into the retracted position, thereby pushing the plastic material from the first chamber (4) into the second chamber (9); and
f. displacing the second piston (12) from the extended position into the retracted position, thereby pushing the plastic material through the discharge opening (13).
